# EUROPÄISCHE PATENTSCHRIFT

(11) **EP 2 783 109 B1**
(45) Veröffentlichungstag und Bekanntmachung des Hinweises auf die Patenterteilung: **13.05.2020**
(21) Anmeldenummer: 12790490.2
(22) Anmeldetag: 09.11.2012
(51) Int. Cl.: F03D 80/10

(54) **VERFAHREN ZUR STEUERUNG EINER FLUGBEHINDERUNGSBEFEUERUNG BZW. EIN WINDPARK ZUR AUSFÜHRUNG EINES SOLCHEN VERFAHRENS**
METHOD FOR CONTROLLING AN OBSTRUCTION LIGHT, AND A WIND PARK FOR CARRYING OUT SUCH A METHOD
PROCÉDÉ DE COMMANDE D'UN FEU D'OBSTACLE OU PARC ÉOLIEN POUR LA MISE EN OEUVRE D'UN TEL PROCÉDÉ

(30) Priorität: 23.11.2011 DE 102011086990
(43) Veröffentlichungstag der Anmeldung: 01.10.2014
(73) Patentinhaber: Wobben Properties GmbH, 26607 Aurich (DE)
(72) Erfinder: HARMS, Stephan, 26529 Upgant-Schott (DE); MÖLLER, Gerd, 28195 Bremen (DE)
(74) Vertreter: Eisenführ Speiser
(86) Internationale Anmeldenummer: PCT/EP2012/072333
(87) Internationale Veröffentlichungsnummer: WO 2013/075959

(56) Entgegenhaltungen:
- WO-A1-2010/133541
- DE-A1- 10 207 824

## Beschreibung

Die Erfindung betrifft ein Verfahren zur Steuerung einer Flugbehinderungsbefeuerung bzw. einen Windpark mit Mitteln zur Ausführung des Verfahrens.

Es sind bereits eine Vielzahl von Vorschlägen gemacht worden, um Flugbehinderungsbefeuerungen von Windenergieanlagen zu steuern.

So ist es bekannt, dass die Flugbehinderungsbefeuerungen (auch kurz "Flugbefeuerungen" genannt) von Windenergieanlagen in einem bestimmten geografischen Gebiet abhängig von der jeweiligen Tageszeit ständig eingeschaltet oder auch abgeschaltet sind.

Auch sind bereits Vorschläge gemacht worden, einen Windpark, bestehend aus einer Vielzahl von Windenergieanlagen, mit einer Radareinrichtung auszustatten, so dass dann Flugobjekte, z. B. Flugzeuge und dergleichen, die sich in der Nähe des Windparks befinden (und beispielsweise auf Kollisionskurs mit dem Windpark liegen), durch Einschalten der Flugbefeuerung auf den Windpark aufmerksam gemacht werden.

Die vorliegende Erfindung geht von der internationalen Patentanmeldung WO 2010/133541 als nächstliegendem Stand der Technik aus.

Diese Anmeldung offenbart die Ausstattung eines Windparks mittels eines sogenannten Sekundär-Radars, das bedeutet, dass wenigstens eine Windenergieanlage des Windparks in der Lage ist, ein Transpondersignal, z. B. eines Flugzeugs oder auch einer Flugleitstelle, zu empfangen und auszuwerten. Das Transpondersignal ist dabei ein in der Luftfahrt typisches sogenanntes "DF 17 Signal", d. h. es enthält auch eine Höheninformation. Wenn die Höheninformation eine Kollision des Flugobjekts mit dem Windpark sicher ausschließen kann, bleibt die Flugbehinderungsbefeuerung ausgeschaltet. Das ist z. B. dann der Fall, wenn das Transpondersignal eine Höheninformation von 30.000 ft (ft = 1 Fuß) enthält.

Ein anderes Dokument aus dem Stand der Technik ist z.B. WO 2004/111443.

Wenn das Transpondersignal jedoch eine Höheninformation enthält, die eine deutlich geringere Entfernung des Flugobjekts zum Windpark beinhaltet, z. B. eine Höheninformation von 1.000 ft, wird die Flugbehinderungsbefeuerung des Windparks eingeschaltet, so dass alle Flugbehinderungsbefeuerungen der Windenergieanlagen aktiviert sind und somit dem Flugobjekt auf optische Weise deutlich macht, wo sich die Windenergieanlagen des Windparks befinden.

Obwohl bereits die beschriebene Lösung gemäß WO 2010/133541 eine sehr gute, sichere und auch kostengünstige Lösung ist, sind dennoch Fehlfunktionen nicht zur Gänze ausgeschlossen.

Die Erfindung stellt sich nun die Aufgabe, das aus WO 2010/133541 bekannte System zu verbessern, insbesondere für den Fall, dass das Sekundär-Radar beschädigt oder zur Gänze ausgefallen ist oder die Transpondersignalsendeeinheit im Flugobjekt ausfällt.

Die Erfindung löst die Aufgabe mit dem Merkmal des Anspruchs 1. Vorteilhafte Weiterbildungen sind in den Unteransprüchen beschrieben.

Erfindungsgemäß wird vorgeschlagen, eine einzige Windenergieanlage und/oder bestimmte Windenergieanlagen des Windparks und/oder alle Windenergieanlagen des Windparks mit einer Mikrofonanordnung und somit mit einer akustischen Überwachungseinrichtung auszustatten. Mikrofonanordnung kann dabei auch bedeuten, ein einzelnes Mikrofon oder auch eine Vielzahl von Mikrofonen, die nach Art eines Mikrofon-Arrays, d. h. x Mikrofone auf einer Fläche, in bestimmter räumlicher Anordnung zueinander liegen. Mittels der Mikrofonanordnung wird nun der Luftraum bzw. die Umgebung um den erfindungsgemäßen Windpark akustisch überwacht, quasi nach Art einer "akustischen Kamera".

Dazu werden alle Geräusche in der Umgebung des Windparks erfasst und einer Signalverarbeitung als Teil der akustischen Überwachungseinrichtung zugeführt.

Durch Ausbildung bestimmter Filter bzw. Signalverarbeitungsalgorithmen können dabei bevorzugt bereits solche Geräusche unberücksichtigt (oder aus den gesamten Geräuschen "herausgerechnet") werden, von denen man sicher weiß, dass sie nichts mit der Annäherung eines Flugobjekts zu tun haben. So verfügen beispielsweise Windgeräusche, insbesondere solche, die aufgrund des Auftreffens des Windes auf die Windenergieanlage verursacht werden, über ein ganz typisches Spektrum (regelmäßig relativ hochfrequent), aber auch über eine bestimmte Geräuschkulisse (Geräuschmuster), die sich akustisch von den Geräuschen bzw. den typischen Frequenzen eines Flugzeugs unterscheiden. So können beispielsweise Windgeräusche auch durch Poppschutzeinrichtungen von Mikrofonen die Windgeräusche relativ sicher aus der gesamten Geräuschkulisse herausgefiltert werden, so dass solche Windgeräusche erst gar nicht mehr vom Mikrofon aufgenommen werden. Es ist im Falle solcher Poppschutze jedoch dafür Sorge zu tragen, dass diese auch sehr wetterbeständig ausgebildet werden.

Auch die Windenergieanlage selbst kann Geräusche verursachen, sei es durch Verstellen der Rotorblätter und/oder die Azimut-Verstellung (Gier-Verstellung) oder auch durch andere Teile der Windenergieanlage, z. B. die Bremsen etc..

Wann immer mit der Mikrofonanordnung und der ihr nachgeordneten Signalverarbeitung festgestellt wird, dass lediglich ein Geräusch erfasst wird, welches von der Windenergieanlage selbst stammt oder vom Wind, sei es, dass dieser auf die Teile der Windenergieanlage trifft oder von Windböen oder wenn auch Geräusche erfasst werden, die vom Boden der Windenergieanlage stammen, z. B. von landwirtschaftlichen Fahrzeugen oder anderen Fahrzeugen in der Nähe der Windenergieanlage, hat dies keine Auswirkung auf die Einschaltung der Flugbefeuerungsanlage, d. h. eine Einschaltung findet bei solchen Geräuschen nicht statt.

Wenn jedoch mit der Mikrofonanordnung Geräusche eines Flugobjekts, z. B. eines Flugzeugs oder eines Hubschraubers (Helikopters), erfasst werden, wird dies mittels der Signalverarbeitungseinrichtung festgestellt und wenn diese Signalverarbeitungseinrichtung eine Schalteinrichtung zur Einschaltung der Flugbehinderungsbefeuerung steuert, wird die Flugbehinderungsbefeuerung eingeschaltet. Die Flugbehinderungsbefeuerung bleibt dann für eine bestimmte Zeit eingeschaltet, z. B. 10 Minuten, und wird dann automatisch wieder abgeschaltet, es sei denn, dass die Mikrofonanordnung nach wie vor noch das Geräusch des Flugobjekts erfasst. In einem solchen Fall wird dann die Flugbehinderungsbefeuerung wiederum für einen weiteren Zeitbereich, z. B. weitere 10 Minuten, weiter betrieben usw. und die Flugbehinderungsbefeuerung abgeschaltet, bis die Mikrofonanordnung das Geräusch des Flugobjekts nicht mehr feststellen kann.

Der Signalverarbeitung der Mikrofonanordnung ist eine Speichereinrichtung zugeordnet, in welcher verschiedene Spektren von Flugzeugen und/oder typische Geräusche von Flugzeugen als Vergleichsparameter abgespeichert sind.

Sobald die Mikrofonanordnung Geräusche von Flugobjekten erfasst, werden diese Geräusche mit den in dem Speicher gespeicherten Geräuschen verglichen und dann, wenn eine hinreichende Übereinstimmung besteht, wird die Flugbehinderungsbefeuerung zu ihrer Einschaltung veranlasst.

Alternativ oder auch zusätzlich können die von der Mikrofonanordnung aufgenommenen Geräusche des Flugobjekts hinsichtlich ihrer Frequenzen bewertet werden, z. B. mittels einer Frequenzanalyse, und das so gemessene Frequenzspektrum des aufgenommenen Geräuschs wird dann mit entsprechenden gespeicherten Frequenzspektren verglichen und bei hinreichender Übereinstimmung wird die Flugbehinderungsbefeuerung eingeschaltet.

Bevorzugt ist die Mikrofonanordnung auf der Windenergieanlage des Windparks angeordnet, auf der sich ohnehin schon eine Sekundär-Radar-Einrichtung befindet, also eine Einrichtung zum Empfang eines Transpondersignals, z. B. eines "DF 17 Signals", also eines Signals, welches eine Höheninformation, z. B. 30.000 ft oder eine Ortsinformation, z. B. "Nordpol", beinhaltet.

Bevorzugt besteht die Mikrofonanordnung aus zwei oder mehr Mikrofonen, wobei die Mikrofone auf unterschiedlichen Seiten der Gondel der Windenergieanlagen angeordnet sind. Da moderne Flugbehinderungsbefeuerungen regelmäßig auch aus wenigstens zwei Blitz- und/oder Leuchteinrichtungen (rotes Licht für die Nachtbefeuerung, weißes Licht für die Tagbefeuerung) bestehen, die ebenfalls auf unterschiedlichen Seiten der Gondel einer Windenergieanlage angeordnet sind, sind die Mikrofone bevorzugt dort angeordnet, wo auch die Signalbefeuerungseinrichtungen, also die Leucht- und/oder Blitzeinrichtungen angeordnet sind und somit auch von den entsprechenden Einrichtungen gehalten, die die Signaleinrichtungen, also die Leuchteinrichtungen (Lampen, Blitze etc.) halten.

Wenn sich nun ein Flugobjekt einer Windenergieanlage bzw. dem Windpark und damit den Windenergieanlagen des Windparks nähert und mittels der Mikrofoneinrichtung ein Geräusch des Flugobjekts aufgenommen und somit gemessen wird, wird die Flugbehinderungsbefeuerung eingeschaltet und zwar auch dann, wenn ein Transpondersignal, also ein DF 17 Signal, empfangen wird, welches eine Höheninformation, z. B. 30.000 ft, beinhaltet, bei welcher Höhe eine relevante Annäherung zwischen dem Flugobjekt und dem Windpark sicher ausgeschlossen werden kann.

Wenn die Sekundär-Radar-Einrichtung ein Transpondersignal, also z. B. ein DF 17 Signal, empfängt, welches die Flugbefeuerungseinrichtung zur Einschaltung veranlasst, so wird diese Einschaltung der Flugbehinderungsbefeuerung auch umgesetzt. Gleichzeitig kann aber mit der Mikrofoneinrichtung auch die Annäherung des Flugobjekts akustisch erfasst werden und somit die Einschaltungsentscheidung bestätigen, bevorzugter ist es aber auch, die aufgenommenen akustischen Signale des Flugobjekts, also dessen Geräusche, aufzunehmen und als Vergleichsgeräusche in dem Speicher, der der Signaleinrichtung der Mikrofonanordnung zugeordnet ist, abzulegen. Somit ermöglicht die Erfindung auch, dass die akustische Überwachung quasi "selbstlernend" bzw. adaptiv ist, da zu erwarten ist, dass die Geräusche eines Flugzeugs, die einmal von der Mikrofonanordnung erfasst werden, zu einem späteren Zeitpunkt (wenn sich wieder ein Flugzeug gleichen Typs der Windenergieanlage bzw. dem Windpark nähert) wieder erfasst werden und somit sich die akustische Überwachung auch auf den Ort der Windenergieanlage bzw. auf den Ort des Windparks einstellt und das dort gespeicherte Geräuschspektrum entsprechend anpasst bzw. erweitert. Da jeder Windpark bzw. jede Windenergieanlage an einem anderen Ort steht und auch die Geräuschkulisse eines Windparks bzw. einer Windenergieanlage innerhalb des Windparks nicht nur von Nachbaranlagen des Windparks oder von typischen Zivilgeräuschen (z. B. Straßenverkehr, Bahnverkehr etc.) abhängig ist, sondern auch vom geografischen Profil, wo der Windpark bzw. die Windenergieanlagen aufgestellt sind, ist eine solche selbstlernende Anpassung sehr wünschenswert.

So ist es beispielsweise verständlich, dass bestimmte Fluggeräusche sich ganz anders anhören bzw. wahrnehmen lassen, wenn eine Windenergieanlage bzw. ein Windpark in der Norddeutschen Tiefebene steht oder in einem hügeligen Gelände oder gar in einem Gelände mit stark ansteigenden Bergen/Felsen, die durchaus schon eine akustische Echobildung zulassen.

Wenn mittels der Mikrofonanordnung (also mittels der akustischen Überwachungseinrichtung) ein Geräusch eines Flugobjekts erfasst wird, wird, wie bereits beschrieben, die Flugbefeuerung der Windenergieanlage oder der Windenergieanlagen des Windparks eingeschaltet. Wenn dann gleichzeitig aber kein Transpondersignal erfasst wird oder ein Transpondersignal erfasst wird, welches eine Höheninformation des Flugobjekts beinhaltet, von dem aus man nicht auf eine Geräuscherfassung schließen könnte, wenn also das von der Mikrofonanordnung gemessene Geräuschsignal sich nicht in sinnvolle Übereinstimmung mit dem Transpondersignal bzw. der Höhenangabe bringen lässt, wird eine entsprechende Information, z. B. Warnmeldung, E-Mail etc., abgesetzt, z. B. an eine Flugleitstelle oder an eine Servicestation des Windparks und eine solche Information kann auch dazu verwendet werden, die Ordnungsmäßigkeit der Transpondersignalempfangsanlage zu überprüfen.

Alternativ oder in Ergänzung der bereits beschriebenen akustischen Überwachung mittels einer Mikrofonanordnung ist es auch möglich, die Umgebung einer Windenergieanlage bzw. eines Windparks visuell zu überwachen, beispielsweise mittels Kameras, vorzugsweise auch Infrarot-Kameras, also Kameras, mittels denen die Erzeugung eines Wärmebildes über die Windparkumgebung möglich ist. Sobald mittels solcher Kameras in bestimmten Sektoren Wärmebilder festgestellt werden, beispielsweise wird der Sektor durch den Bereich oberhalb eines vorbestimmten und selbst gewählten Horizonts gebildet, wird auf die Annäherung eines Flugobjekts geschlossen. Dabei ist dann darauf zu achten, dass nicht jedes gemessene Wärmeereignis gleich zur Einschaltung einer der Flugbefeuerungen führt, sondern erst dann, wenn das Wärmeereignis auch eine bestimmte Qualität aufweist, um somit das Einschalten der Flugbefeuerung zu verhindern, wenn sich beispielsweise ein Vogel in der Nähe der Windenergieanlage aufhält.

Auch ist es möglich, die Umgebung eines Windparks alternativ oder in Ergänzung zur akustischen Überwachung mittels einer Kameraanordnung zu überwachen, denn da Flugzeuge auch über eine eigene Leuchtsignaleinrichtung verfügen, die sich insbesondere auch nachts sehr gut erkennen lässt, kann abhängig davon, was mit den Kameras wiederum oberhalb eines selbst gelegten Horizonts erfasst wird, die Flugbefeuerungseinrichtung einer Windenergieanlage bzw. der Windenergieanlagen eines Windparks eingeschaltet werden.

Nachfolgend wird eine Ausführungsform der vorliegenden Erfindung exemplarisch unter Bezugnahme auf die begleitenden Figuren näher erläutert. Es zeigen:
- Fig. 1: eine erfindungsgemäße Gondel in einer Frontansicht auf die Rotornabe,
- Fig. 2: eine Gondel in einer Frontansicht gemäß Fig. 1, jedoch mit dem Rotor in einer veränderten Stellung,
- Fig. 3: eine erfindungsgemäße Gondel gemäß Figuren 1 und 2 in einer Seitenansicht,
- Fig. 4: eine erfindungsgemäße Gondel gemäß einer der Figuren 1 bis 3 in einer Rückansicht,
- Fig. 5: Ablaufdiagramm eines Backup-Systems bei Ausfall eines Transponders eines Luftfahrzeugs,
- Fig. 6: ein weiteres Ausführungsbeispiel der Erfindung,
- Fig. 7: ein Blockschaltdiagramm der Erfindung.

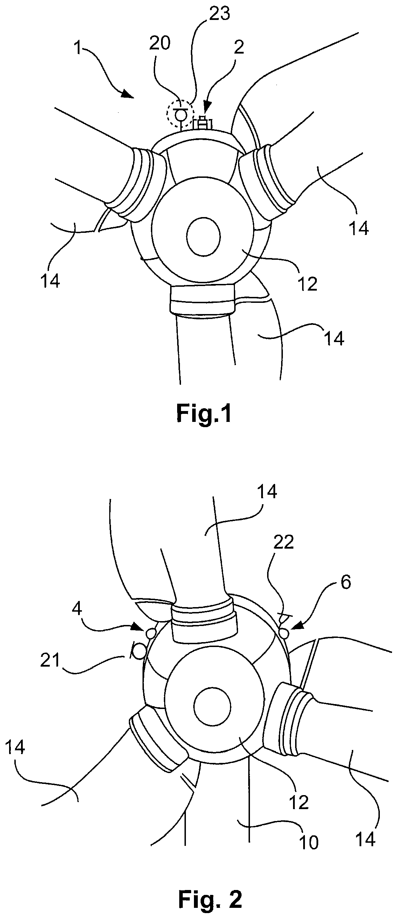

Die Figuren 1 bis 4 sind bis auf die Darstellung der Mikrofone bekannt aus WO 2010/010043.

Figur 1 zeigt eine Gondel 1 in einer Frontansicht auf eine Nabenabdeckung 12 mit drei Rotorblättern 14, die jedoch nur in ihrem Wurzelbereich dargestellt sind. Von den Rotorblättern 14 befindet sich eines in einer sogenannten 6-Uhr-Stellung und verdeckt dabei einen Turm, auf dem die Gondel 1 angeordnet ist. Zwei weitere Rotorblätter 14 sind in ihrer 10-Uhr- beziehungsweise 2-Uhr-Stellung und geben somit den Blick frei auf eine mittlere Leuchtvorrichtung 2, die oben auf der Gondel 1 angeordnet ist. Die mittlere Leuchtvorrichtung 2 ist als Rundumleuchte ausgestaltet. Eine linke und eine rechte seitliche Leuchtvorrichtung sind in Figur 1 durch die Rotorblätter 14 in 10-Uhr- beziehungsweise 2-Uhr-Stellung verdeckt.

Gemäß Figur 2 hat sich der Rotor mit den Rotorblättern 14 gegenüber Figur 1 weiter gedreht und ein Rotorblatt 14 ist nun fast in einer 12-Uhr-Stellung. Dieses nach oben weisende Rotorblatt 14 verdeckt nun die mittlere Leuchtvorrichtung 2. Dafür ist der Blick frei auf die linke seitliche Leuchtvorrichtung 4 und die rechte seitliche Leuchtvorrichtung 6. Im Übrigen ist der Blick auch frei auf den Turm 10, der hier nur angedeutet ist.

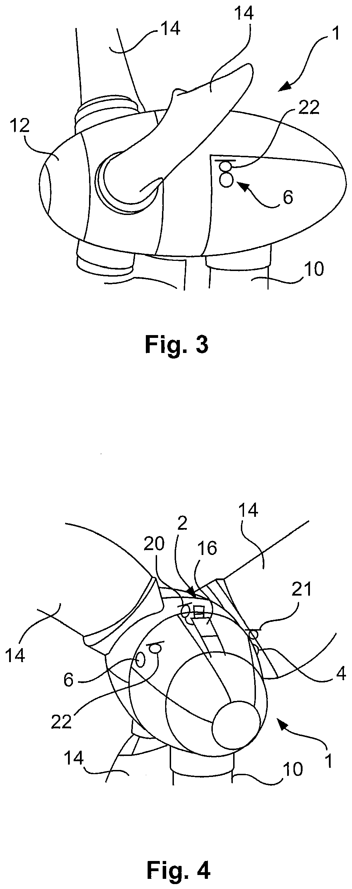

Aus der Seitendarstellung der Gondel 1 gemäß Figur 3 wird die Position der rechten seitlichen Leuchtvorrichtung 6 deutlich. Die rechte seitliche Leuchtvorrichtung 6 ist in Längsrichtung der Gondel 1, also gemäß der Figur 3 in der Richtung von rechts nach links etwa in der Mitte der Gondel 1 angeordnet. Dies ist auch etwa die breiteste Stelle der Gondel 1. In vertikaler Richtung ist die rechte Leuchtvorrichtung 6 etwas höher als die Mitte der Gondel 1 angeordnet. In dieser Figur 3 ist die oben auf der Gondel angeordnete mittlere Leuchtvorrichtung durch das zum Betrachter hin weisende Rotorblatt 14 verdeckt, aber die seitliche Leuchtvorrichtung 6 ist sichtbar.

Aus der Rückansicht der Figur 4 sind sämtliche drei Leuchtvorrichtungen 2, 4, 6 zu erkennen. Die mittlere Leuchtvorrichtung 2 ist oben auf der Gondel 1 angeordnet. Die rechte und linke seitliche Leuchtvorrichtung 6, 4 - die aufgrund der Rückdarstellung in Figur 4 links und rechts zu sehen sind - befinden sich etwa an gegenüberliegenden Seiten. Die Gondel 1 ist somit etwa zwischen der rechten und linken seitlichen Leuchtvorrichtung 6, 4 angeordnet. Im Übrigen sind die drei Leuchtvorrichtungen 2, 4, 6 etwa auf einem Ringbereich um die Gondel 1 angeordnet, wobei dieser Ringbereich in einer Ebene, parallel zur Rotorblattebene, angeordnet ist. In der Figur 4 ist im Übrigen noch eine Ausstiegsluke 16 unmittelbar hinter der mittleren Leuchtvorrichtung 2 zu erkennen.

Wie in den Figuren 1 und 4 auch zu erkennen, ist die Windenergieanlage mit mehreren Mikrofonen 20, 21 und 22 ausgestattet. Diese Mikrofone sind bevorzugt genau an den Stellen platziert, wo auch die Leuchtvorrichtungen 2, 4 und 6 angeordnet sind. Dies hat den Vorteil, dass dort ohnehin schon elektrische Anschlüsse vorhanden sind und auch Einrichtungen ausgebildet sind, um die Mikrofone mechanisch zu halten. Vor allem hat aber die Anordnung der Mikrofone an diesen Orten auch den Vorteil, dass bei einer Annäherung eines Flugobjekts an den hinteren Teil der Gondel dort die akustische Erfassung der Geräusche des Flugobjekts jederzeit sicher erfasst werden kann. Dies gilt aber auch für die Annäherung des Flugzeugs von der Seite an die Gondel oder auch von der Frontseite, also eine Annäherung des Flugobjekts an den Rotor. Im letzteren Fall ist durch die Anordnung der Mikrofone auch sichergestellt, dass zu keinem Zeitpunkt ein Rotorblatt beide Mikrofone gleichzeitig verdeckt und somit akustisch abschirmt, denn wie insbesondere in Figur 2 zu erkennen, ist unabhängig von der Rotorstellung von der Vorderseite immer mindestens eines der Mikrofone 21, 20 oder 22 zu erkennen.

Es ist leicht möglich, die Zahl der Mikrofone auf der Gondel zu erhöhen und auch an weiteren Stellen Mikrofone zu platzieren. Auch ist es möglich, die Zahl der Mikrofone zu reduzieren, beispielsweise nur mit einem einzigen Mikrofon 20 zu arbeiten, oder nur mit einem der Mikrofone 21 oder 22. Um Windgeräusche von vorneherein gar nicht erst an die Mikrofonmembranen und damit in das Mikrofon zu lassen, können die Mikrofone 20, 21 und/oder 22 auch mit üblichen Poppschutzeinrichtungen 23 versehen sein. Diese Poppschutzeinrichtung ist bevorzugt wetterbeständig ausgebildet und schützt auch das Mikrofon gegen Wettereinflüsse, z. B. Regen, Feuchtigkeit etc. Der Wetterschutz der Mikrofone kann auch dadurch ausgebildet werden, indem die Mikrofone in einem eigenständigen Gehäuse untergebracht werden, um somit sicher vor Feuchtigkeit, Regen, Hagel, Schnee etc. geschützt zu werden.

Als Alternative zur Anordnung der Mikrofone außen an der Gondel ist es aber auch möglich, das bzw. die Mikrofone in der Gondel unterzubringen. Dies hat den Vorteil, dass damit automatisch ein guter Wind- und Wetterschutz gegeben ist, denn innerhalb der Gondel, also an dem Ort, innerhalb dessen der Generator und weitere wichtige Teile des Maschinenträgers der Windenergieanlage untergebracht sind, ist ein Wetterschutz bereits jetzt schon gegeben. Besonders vorteilhaft ist die Unterbringung innerhalb der Gondel dann, wenn das Gondelgehäuse seinerseits sehr gut Schall überträgt, was dann der Fall ist, wenn das Gondelgehäuse aus Metall, z. B. aus einem Aluminiumblech, besteht. Dann nämlich werden die Schallgeräusche von draußen mit über das Gondelgehäuse, also dessen Wandung, unter Umständen sogar verstärkt übertragen, weil die gesamte Gondel auch die Funktion eines Schallempfängers aufweist und somit die Gondelwandung quasi eine Schallmembran darstellt und die über die gesamte Gondel aufgenommenen Geräusche dann auch in das Innere der Gondel weitergegeben werden.

In einem solchen Fall ist es auch denkbar, die erfindungsgemäße Mikrofonanordnung sehr einfach auszustatten, beispielsweise als Beschleunigungssensor, welcher mit der Gondelwandung gekoppelt ist. Nähert sich nämlich ein Flugobjekt der Windenergieanlage, führt der Schall dieses Flugobjekts dazu, dass sich die Gondelwandung in einer bestimmten, für das Flugobjekt typischen Art und Weise bewegt und diese Bewegung kann durch einen Dehnungssensor oder einen Beschleunigungssensor sehr exakt gemessen werden. Somit kann auch durch diese besondere Form eines Beschleunigungs- oder Dehnungssensors das flugobjekttypische Geräusch ermittelt werden.

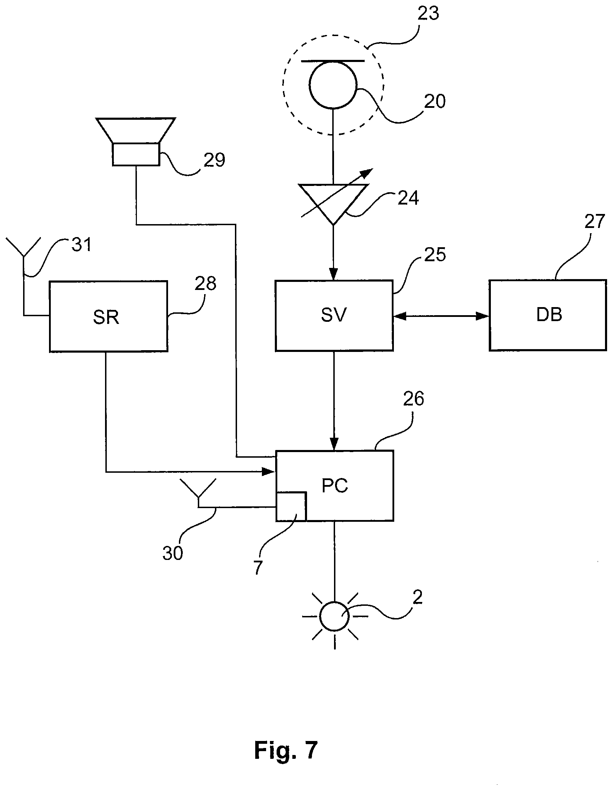

Figur 7 zeigt beispielhaft ein einfaches Blockschaltbild einer erfindungsgemäßen akustischen Überwachungseinrichtung mit einem Mikrofon und einer Steuerung der Flugbefeuerungseinrichtung 2. Wie hier zu erkennen, ist das Mikrofon 20 mit einem Poppschutz 23 versehen. Die vom Mikrofon 20 aufgenommenen Geräusche werden in einem Verstärker 24 verstärkt oder in einer entsprechenden Einrichtung 24 vorverarbeitet und diese Signale werden dann einer Signalverarbeitungseinrichtung 25 zugeführt. Diese Signalverarbeitungseinrichtung kann einerseits aus einer Frequenzanalyseeinheit bestehen, so dass aus den von der Mikrofonanordnung aufgenommenen Geräuschen das entsprechende Frequenzmuster bzw. Frequenzspektrum der aufgenommenen Geräusche ermittelt wird und/oder das aufgenommene Geräuschsignal wird zeitlich in Blöcke unterteilt und dann werden die Ergebnisse der Signalverarbeitungseinrichtung 25 an einen PC 26 weitergeleitet. Dieser PC 26 (Personal Computer oder "CPU"-Central Processing Unit) kann auch der sogenannte SCADA-Rechner des Windparks sein, also ein zentraler Rechner des Windparks, über den die Steuerung der Flugbefeuerungseinrichtung oder anderer Einrichtungen vorgenommen wird. In dem Rechner bzw. PC 26 oder in einem Vergleicher können die Ergebnisse der Signalverarbeitung mit Vergleichswerten aus einer Datenbank 27 verglichen werden. Zum Beispiel ist es möglich, in der Datenbank sowohl echte Geräusche bzw. Geräuschmuster (sound files; Tondateien) abzulegen und/oder auch Frequenzmuster bzw. Frequenzspektren typischer Flugobjekte.

Wenn aus dem Vergleich der aufgenommenen Signale des Mikrofons 20 und der abgespeicherten Signale in der Datenbank 27 eine hinreichende Übereinstimmung besteht und relativ sicher auf die Annäherung eines Flugobjekts geschlossen werden kann, so nimmt der PC die Einschaltung der Flugbefeuerung 2 vor.

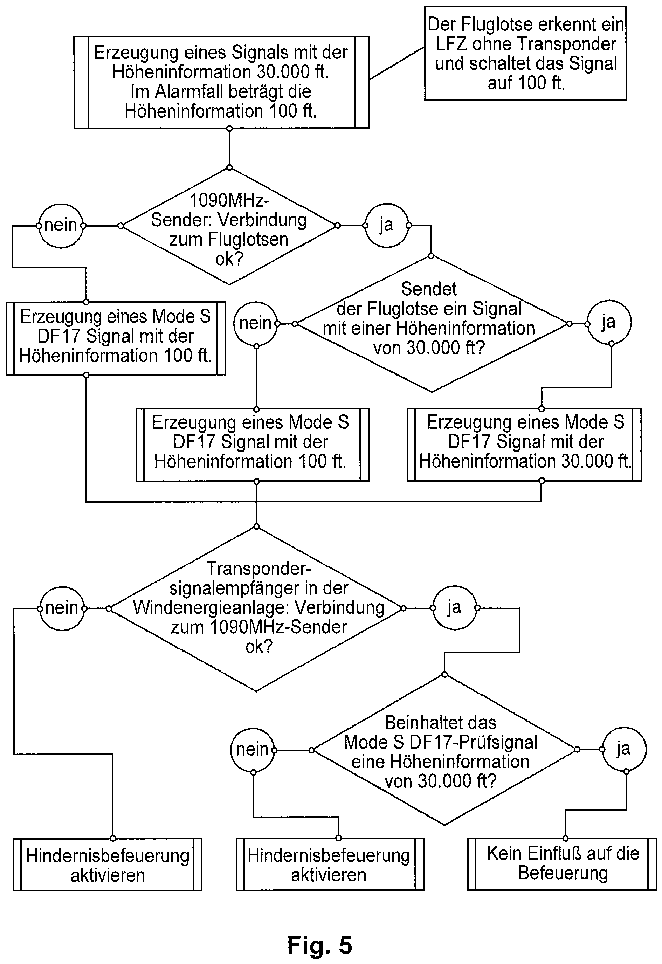

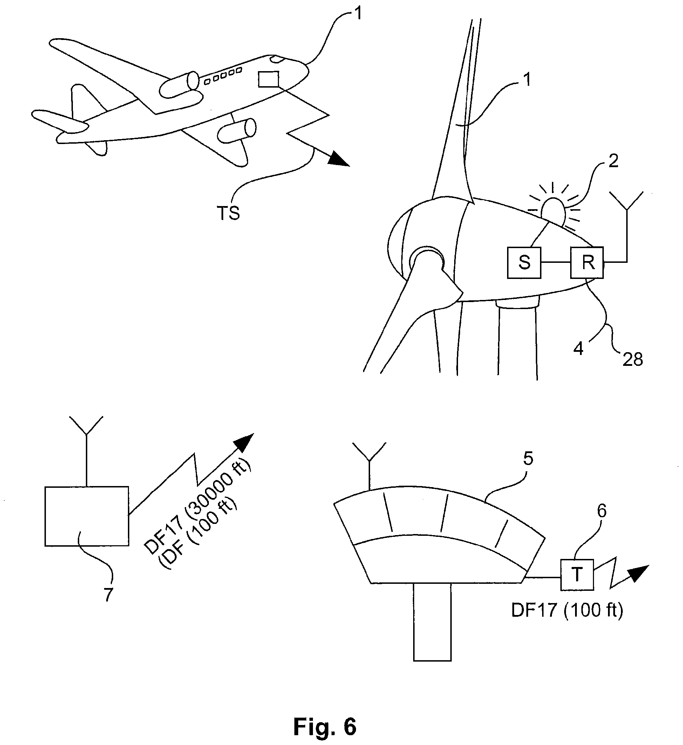

Gleichzeitig kann der PC 26 mit einer Sekundär-Radar-Einrichtung 28 verbunden sein, deren Grundstruktur in den Figuren 5 und 6 aufgezeigt ist. Die Sekundär-Radar-Einrichtung als solche ist auch bekannt aus der bereits erwähnten internationalen Patentanmeldung WO 2010/133541.

Wenn mittels der Sekundär-Radar-Einrichtung 28 der Empfang eines DF 17 Signals festgestellt wird, welches eine relativ geringe Höhenangabe aufweist, z. B. 100 ft, wird dies ebenfalls an den PC 26 (der hier die Funktion einer Schalteinrichtung aufweist) weitergeleitet und dieser PC schaltet dann die Flugbefeuerungseinrichtung 2 und etwaige weitere Flugbefeuerungseinrichtungen der Windenergieanlage ein.

Dies erfolgt auch dann, wenn mittels der Mikrofoneinrichtung 23 kein akustisches Signal bzw. kein Geräusch eines Flugobjekts festgestellt wird.

Andersherum wiederum erfolgt die Einschaltung der Flugbefeuerungseinrichtung 2 auch dann, wenn mittels des Mikrofons 23 das Geräusch eines Flugobjekts erfasst wird und als solches erkannt wird, auch wenn über die Sekundär-Radar-Einrichtung kein DF-Signal (Transpondersignal) eines Flugobjekts erhalten wird, welches eine etwaige Annäherung oder Gefährdung bedeutet, z. B. ein DF 17 Signal mit der Höhenangabe "30.000 ft".

In dem PC wird also eine "oder"-Verknüpfung der Signaleingänge von der Signalverarbeitung 25 bzw. der Radareinrichtung 28 vorgenommen.

Wenn ein Geräusch eines Flugobjekts empfangen wird und gleichzeitig auch ein DF Signal mit einer relativ niedrigen Höhenangabe, z. B. 100 ft, empfangen wird, wird in jedem Fall die Flugbefeuerungseinrichtung 2 eingeschaltet. Gleichzeitig kann dabei auch das aufgenommene Geräusch (oder nach Frequenzanalyse mittels Frequenzanalysator dessen Frequenzspektrum) als Muster in der Datenbank 27 gespeichert werden, so dass mit der Zeit dann auch eine für den Ort des Windparks bzw. der Windenergieanlage, in der die Einrichtung nach Figur 7 realisiert ist, angepasste Geräuschdatenbank angelegt wird, so dass eine sicherere Entscheidung darüber getroffen werden kann, ob die Flugbefeuerungseinrichtung 2 aufgrund eines bestimmten Geräuschereignisses eingeschaltet wird oder auch nicht.

In der Signalverarbeitungseinrichtung kann auch eine Filterfunktion hinterlegt werden, mittels der typische Zivilgeräusche, z. B. von Verkehr am Boden der Windenergieanlage oder von sonstigen Einrichtungen, die sich am Boden der Windenergieanlage befinden, insbesondere aber auch mittels der Geräusche der Windenergieanlage selbst, die z. B. vom Pitch-Antrieb herrühren oder die sich bei der Azimut-Einstellung der Windenergieanlage ergeben, aus dem Mikrofonsignal herausgefiltert bzw. herausgerechnet werden. Typischerweise haben die Zivilgeräusche wie auch die Geräusche, die die Windenergieanlage selbst verursacht, ein ganz anderes Frequenzspektrum als das Frequenzspektrum eines Flugobjekts und mittels der Einrichtung nach Figur 7 kann auch die Anlage selbst wiederum über die Abspeicherung typischer Frequenzmuster bzw. Geräusche, die sie selbst verursacht, in der Datenbank 27 die eigenen Geräusch- bzw. Frequenzspektrendatenbank erweitern, so dass wiederum bei etwaigen Geräuschen viel sicherer vorhergesagt werden kann, ob es sich dabei um ein Ereignis handelt, welches die Aktivierung, also Einschaltung, der Flugbefeuerungseinrichtung 2 auslösen soll.

Wie in Figur 7 zu erkennen, kann auch ein Lautsprecher 29 vorgesehen sein, welcher in einem bestimmten Abstand zu dem Mikrofon 20 angeordnet wird, z. B. in einem vorbestimmten Abstand, z. B. ca. 0,1 bis 5m, auf der Gondel der Windenergieanlage innerhalb des Windparks. Nun können die in der Datenbank (also im Speicher) 27 gespeicherten Geräusche auch dem PC 26 zugeführt werden und dieser kann dann entsprechende elektrische Signale an den Lautsprecher 29 weiterleiten, so dass dieser typische Geräusche, z. B. eines Flugobjekts oder auch typische Geräusche, die bei der Pitch- oder Azimut-Verstellung der Windenergieanlage entstehen, erzeugt. Erzeugt die Lautsprechereinrichtung 29 beispielsweise typische Geräusche eines Flugobjekts, z. B. eines Helikopters, so werden diese vom Mikrofon 20 empfangen, entsprechend ausgewertet und müssten dann zu einem Einschaltereignis für die Flugbefeuerung 2 führen. Hat das Mikrofon 20 jedoch ein technisches Problem oder haben die nachgelagerten Stufen der Signalverarbeitungs- und Auswerteeinrichtung eine technische Fehlfunktion, so wird diese im PC 26 (welcher auch Teil der Signalverarbeitungseinrichtung bzw. der akustischen Überwachungseinrichtung ist) sicher erkannt und es kann dann ein entsprechender Warnhinweis, z. B. E-Mail, SMS oder dergleichen, an eine Flugleitstelle oder auch an den Service der Windenergieanlage abgesetzt werden, so dass dieser sich das technische Problem näher ansehen kann, um eventuelle Reparaturen vorzunehmen.

Bevorzugt ist in dem PC ein Programm abgelegt, welches den Test der eigenen akustischen Überwachung für Flugobjekte innerhalb bestimmter Zeiträume immer wieder vornimmt, z. B. einmal täglich.

Bevorzugt werden die Testergebnisse in einem Speicher abgelegt und können auch zu Dokumentationszwecken wiederum an eine zentrale Stelle weitergeleitet werden.

Für den Fall, dass mit der Testeinrichtung, also mittels des PCs 26, festgestellt wird, dass die akustische Überwachung fehlerbehaftet ist, kann auch ein ständiges Einschaltsignal abgesetzt werden, so dass dann die Flugbefeuerungseinrichtung 2 ständig eingeschaltet bleibt, bis der Schaden an der akustischen Überwachung behoben worden ist.

Figuren 5 und 6 zeigen wie bereits erwähnt eine Anordnung einer Radareinrichtung für eine Windenergieanlage, wie sie aus WO 2010/133541 bekannt ist.

Selbstverständlich kann die erfindungsgemäße Windenergieanlage auch ohne eine Sekundär-Radar-Einrichtung ausgeführt werden, so dass nur mittels einer akustischen Überwachung der Luftraum überwacht wird, um damit sicher eine Einschaltung der Flugbefeuerungseinrichtung zu veranlassen, wenn sich ein Flugobjekt nähert.

Die akustische Überwachung, die wie nach Art einer "akustischen Kamera" mit den dargestellten Mikrofonen erfolgt, hat aber auch den Vorteil, dass dann, wenn der Windpark bzw. wenn eine Windenergieanlage über eine Sekundär-Radar-Einrichtung, wie in Figuren 5 und 6 offenbart, verfügt, diese Sekundär-Radar-Einrichtung mit der beschriebenen akustischen Überwachung des Luftraums ein weiteres Backup-System erhält und noch sicherer gestaltet wird, auch für den Fall, dass die Sekundär-Radar-Einrichtung aus welchen technischen Gründen auch immer fehlerbehaftet ist oder ausfällt.

Mittels des PCs 26 können auch typische Transpondersignale, also typische DF (insbesondere DF 17) Signale mit einer gewünschten Höheninformation (z. B. 30.000 ft oder 100 ft) erzeugt werden und diese können dann über eine Antenne 30 abgesetzt werden. Diese Antenne kann wiederum auf der Windenergieanlage des Windparks angeordnet werden, auf der sich ohnehin schon die Sekundär-Radar-Einrichtung befindet (die Antenne kann aber auch auf anderen Windenergieanlagen des Windparks angeordnet werden).

Normalerweise sollte jetzt die Antenne 31 der Sekundär-Radar-Einrichtung 28 das entsprechende DF 17 Signal, also das Transpondersignal, empfangen und auswerten, so dass auch, wie schon bei der akustischen Überwachung, der Selbsttest der Sekundär-Radar-Einrichtung möglich ist.

Wenn mittels der akustischen Überwachung des Luftraums, wenn also mittels der Mikrofonanordnung der Windenergieanlage, die Annäherung eines Flugobjekts festgestellt wird und dies zur Einschaltung der Flugbefeuerungseinrichtung der Windenergieanlage des Windparks führt, kann auch das Einschaltsignal an andere Windenergieanlagen in der Umgebung abgesetzt werden, also auch an solche Windenergieanlagen, die gar nicht Teil des erfindungsgemäßen Windparks sind. Auch diese Windenergieanlagen können dann ihrerseits ihre Flugbefeuerungseinrichtung einschalten.

Die Mikrofone 20, 21 und 22 der Windenergieanlage sind bevorzugt mit einer besonders guten Körperschallisolierung versehen, so dass möglichst wenig Körperschall der Windenergieanlage auf die Mikrofone übertragen wird.

Wie beschrieben, kann dann, wenn in der Nähe der Mikrofonanordnung ein Lautsprecher (oder Tonsignalgenerator) installiert wird, über diesen auch ein flugobjekttypisches Geräusch generiert werden, um somit die Mikrofonanordnung und die nachgelagerte Signalverarbeitung und Signalauswertung hinsichtlich ihrer korrekten Funktionsweise zu überprüfen.

Eine weitere Möglichkeit besteht auch darin, dass mittels des Lautsprechers und einer entsprechenden Signalquelle (z. B. Tonsignalgenerator), die ein Signal an den Lautsprecher führt, ständig ein bestimmtes Geräusch (Tonsignal) vom Lautsprecher erzeugt wird, z. B. ein Sinuston (oder Wobbelsignal) mit einer ganz bestimmten Lautstärke und Frequenz.

Solange dieses Sinussignal des Lautsprechers von der Mikrofonanordnung bzw. der nachgelagerten Signalverarbeitung sicher erkannt wird (dies ist aufgrund des Sinussignals sehr einfach möglich), wird die Flugbefeuerung nicht eingeschaltet. Treten jetzt jedoch weitere Geräusche in der Umgebung der Mikrofonanordnung auf, z. B. es nähert sich ein Flugzeug und diese Flugobjektgeräusche überlagern sich dabei mit dem Sinussignal des Lautsprechers, wird die Flugbefeuerung eingeschaltet. Sobald das Tonsignal des Lautsprechers und das weitere, vom Flugobjekt stammende Geräusch, eine bestimmte Lautstärke (und Frequenzlage) zueinander einnehmen, wird das Sinussignal nicht mehr so einfach von der Signalverarbeitung der Mikrofonanordnung erkannt oder wenn das Geräusch des Flugobjekts sehr laut ist, wird es überhaupt nicht mehr wahrgenommen, so dass dann sehr einfach aufgrund des Nicht-mehr-feststellen-Könnens des Tonsignals ein Einschaltsignal und die Einschaltung der Flugbefeuerung generiert wird. Das hörbare Signal, welches mit dem Lautsprecher (oder irgendeiner anderen Tonerzeugungseinrichtung) erzeugt wird, weist insbesondere ein Spektrum auf, welches im Bereich des typischen Spektrums der Geräusche von Flugobjekten liegt, so dass bei Annäherung eines Flugobjekts, also eines Flugzeugs oder eines Helikopters, mit relativ hoher Wahrscheinlichkeit erwartet werden kann, dass das von Lautsprecher erzeugte Tonsignal gar nicht mehr oder in starkem Maße verfälscht von der Mikrofoneinrichtung aufgenommen werden kann.

Es kann aber auch vorteilhaft sein, dass das von dem Lautsprecher erzeugte Tonsignal eine ganz andere Frequenz oder ganz andere Frequenzen aufweist, welche typisch sind für die Geräusche von Flugobjekten.

Eine weitere Möglichkeit kann auch darin bestehen, dass mittels des Lautsprechers nicht etwa ein monotones Tonsignal erzeugt wird, sondern ein "Wobbelsignal", also ein Signal, welches über die Zeit ständig die Frequenz ändert, beispielsweise innerhalb des hörbaren Frequenzspektrums.

Dabei ist es auch durchaus vorteilhaft, wenn der Lautsprecher auch ein Signal im Bereich des Ultraschalls oder des Infraschalls erzeugen kann und entsprechend sollte auch die Mikrofonanordnung in der Lage sein, Töne nicht nur aus dem hörbaren Schallbereich, sondern auch aus dem Infraschall- und Ultraschallbereich aufzunehmen.

Dies kann den Vorteil haben, dass typische Frequenzen aus dem Infraschall- und Ultraschallbereich von Flugobjekten ebenfalls mit erfasst werden können, um somit sicher auf die Annäherung eines Flugobjekts schließen und vor allem sicher eine Einschaltung der Flugbefeuerung vornehmen zu können.

Wird also das akustische Lautsprechersignal von einem weiteren Geräusch in der Umgebung des Mikrofons hinreichend übertönt, kann dies auch zur Einschaltung der Flugbefeuerung führen.

Für den Fall, dass es regnet, insbesondere für den Fall von Starkregen, aber auch von Hagel, wird mit an Sicherheit grenzender Wahrscheinlichkeit das Störgeräusch solcher Wetterereignisse das akustische Signal des Lautsprechers so weit verfälschen oder übertönen, dass dann eine Einschaltung der Flugbefeuerung verursacht und vorgenommen wird. Dies kann ein gewollter Zustand sein, um die besonders hohe Sensibilität der erfindungsgemäßen akustischen Überwachung darzustellen.

Der Vorteil der Erzeugung eines akustischen Signals durch den Lautsprecher besteht auch darin, dass sich damit die akustische Überwachung in einem ständigen Betrieb befindet und somit auch ständig die Funktionsweise der akustischen Überwachung überprüfbar ist.

Durch die windenergieanlagentypischen Eigengeräusche, z. B. bei Pitch-Verstellungen, Azimut-Verstellung oder dergleichen, sollte jedoch bei der Einstellung der erfindungsgemäßen Überwachung dafür Sorge getragen werden, dass nicht immer dann, wenn auch kurzzeitig einmal das Lautsprechersignal von einem anderen Signal übertönt wird, gleich die Flugbefeuerung eingeschaltet wird. Da die Pitch-Verstellung oder auch die Azimut-Verstellung ohnehin nur sehr kurzfristig erfolgt, z. B. dauert eine Pitch-Verstellung regelmäßig nicht länger als 5 Sekunden und ähnliches gilt auch für eine Azimut-Verstellung, kann also in der akustischen Überwachung auch ein Prüfalgorithmus hinterlegt werden, welcher überprüft, wie lange das Lautsprechersignal nicht mehr oder stark verfälscht von der erfindungsgemäßen Mikrofonanordnung bzw. Signalverarbeitung erkannt wird.

Wird beispielsweise das Lautsprechersignal für einen vorbestimmten Zeitraum, z. B. weniger als 5 Sekunden, verfälscht, kann ziemlich sicher auf ein von der Windenergieanlage selbst verursachtes Geräuschereignis geschlossen werden und somit bleibt die Flugbefeuerungseinrichtung ausgeschaltet bzw. sie wird deshalb nicht eingeschaltet. Ist aber die zeitliche Länge der akustischen Beeinflussung des Lautsprechersignals länger als der vorbestimmte Zeitraum, z. B. länger als 5 Sekunden oder länger als 10 Sekunden, länger als 15 Sekunden usw., so wird dann die Flugbefeuerung eingeschaltet, weil davon ausgegangen werden kann, dass eine so lange akustische Beeinflussung bzw. Übertönung des Lautsprechersignals auf ein Geräuschereignis zurückzuführen ist, welches nicht von der Windenergieanlage selbst stammt.

Nähert sich ein Flugobjekt, so ist dieses bei einer normalen Lautstärke regelmäßig über einen relativ langen Zeitraum, z. B. mehr als 20 Sekunden, oftmals sogar mehrere Minuten, schon vorher akustisch wahrzunehmen.

Wie bereits beschrieben, ist es auch durchaus wünschenswert, mittels der Mikrofonanordnung eine Lokalisierung des sich nähernden Flugobjekts vorzunehmen.

Verfügt die Mikrofonanordnung über beispielsweise drei Mikrofone, so kann aus der Laufzeit und dem Laufzeitunterschied des eintretenden Schalls des Flugobjekts in etwa schon eine Vorabschätzung vorgenommen werden, von welcher Seite aus sich das Flugobjekt der Windenergieanlage bzw. dem Windpark nähert.

Wünschenswert ist es aber, dass gar nicht der gesamte Luftraum, insbesondere nicht der zur Bodenseite der Windenergieanlage, überwacht wird, sondern im Wesentlichen nur ein um die Gondel herum begrenzter und welcher sich etwa ± 15 bis 45°, vorzugsweise ± 15°, bezogen auf den von der Gondel gedachten Horizont, begrenzt.

Der Grund hierfür liegt darin, dass genau aus diesem Bereich die Flugobjekte zu erwarten sind, die sich überhaupt der Windenergieanlage in gefährlicher Weise nähern könnten.

Selbstverständlich ist es aber auch möglich, mittels Mikrofonen mit einer Kugelcharakteristik den gesamten Luftraum um die Windenergieanlage selbst akustisch zu überwachen.

Soll jedoch nur ein ganz bestimmter Ausschnitt, z. B. der beschriebene 360° Kreisring (Streifen) um die Gondel, überwacht werden, können auch Richtmikrofone zum Einsatz kommen, die genau diesen Bereich besonders sensibel überwachen. Dabei ist es auch möglich, nicht nur feststehende Richtmikrofone einzusetzen, sondern auch ein Richtmikrofon einzusetzen, welches sich auf einer motorischen Unterlage befindet und somit die gesamte 360° Ebene ständig überstreicht und somit den Horizont in gewisser Weise nach akustischen Ereignissen "abscannt".

Besonders geeignet sind zur Umsetzung der Erfindung auch Mikrofone, die eine Nierenbzw. Supernieren-Richtcharakteristik aufweisen und wenn hiervon mehrere, z. B. drei oder mehr, auf der Gondel angeordnet sind, lässt sich damit in sehr guter Weise der Horizont ± 15° (der Horizont ist dabei auf die Höhe der Nabe bezogen) nach akustischen Geräuschen und Ereignissen überwachen.

Zur Verbesserung der Lokalisierung eines Flugobjekts können aber auch die Mikrofonsignale noch einer detaillierten Weiterverarbeitung unterzogen werden, um somit relativ präzise den genauen Ort des lokalisierten Flugobjekts bestimmen zu können.

Die Mikrofonanordnung kann auch dazu verwendet werden, die gesamte Windenergieanlage akustisch zu überwachen. In jedem Fall werden ohnehin hörbare akustische Ereignisse der Windenergieanlage im Bereich der Gondel von der Mikrofonanordnung aufgenommen. Wenn dann die Mikrofonanordnung auch mit einer Speichereinrichtung und/oder einer Datenkommunikationseinrichtung mit einer entsprechenden Zentrale (in der z. B. Menschen sind) verbunden ist, können die von der Mikrofonanordnung aufgenommenen Geräusche dort abgehört und entsprechend bewertet werden.

Auch ist es denkbar, in einem solchen Fall die Mikrofonanordnung als Notkommunikationsleitung mit der Zentrale zu verwenden, denn wenn sich in der Gondel der Windenergieanlage Servicetechniker oder dergleichen aufhalten sollten und diese in Not sind, könnten sie sich auf diese Art und Weise über die Mikrofonanordnung noch mit der Zentrale, insbesondere der Servicezentrale, in Kommunikationsverbindung setzen und auf die eigenen Umstände aufmerksam machen.

Wie beschrieben, dient die erfindungsgemäße akustische Überwachungseinrichtung vornehmlich dazu, zunächst einmal überhaupt die Annäherung eines Flugobjekts, z. B. eines Flugzeugs oder eines Helikopters, zu erkennen.

Auch ist es durch Einstellung der akustischen Überwachungseinrichtung unter Umständen möglich, bereits eine Ortung, also eine lokale Bestimmung, der etwaigen Lage des Flugobjekts vorzunehmen.

Wenn sich nun ein Flugobjekt der Windenergieanlage oder dem Windpark nähert, so wird dabei die Lautstärke, die dieses Flugobjekt verursacht und die von der akustischen Überwachungseinrichtung mittels der Mikrofonanordnung aufgenommen und ausgewertet wird, stetig zunehmen.

Eine weitere erfindungsgemäße Variante ist es nun, dass bei einem Anstieg der Lautstärke des Flugobjekts auch die Änderung in der Steuerung der Flugbefeuerung vorgenommen werden kann.

Üblicherweise besteht die Flugbefeuerung von Windenergieanlagen aus Blitzleuchten, die in einem bestimmten Rhythmus einen Lichtblitz erzeugen oder aus Leuchten, die in einem bestimmten Rhythmus und für eine ganz bestimmte Zeit ein- und ausgeschaltet sind, z. B. im Rhythmus "1 Sekunde einschalten, 1 Sekunde ausschalten, 1 Sekunde einschalten, 1 Sekunde ausschalten, etc.".

Bei den Flugbefeuerungen werden dabei auch für die Tagbeleuchtung regelmäßig Leuchtmittel mit weißem Licht eingesetzt, für die Nachtflugbefeuerung hingegen wird regelmäßig mit Licht roter Farbe gearbeitet.

Wenn sich nun, wie bereits erwähnt, ein Flugobjekt der akustischen Überwachungseinrichtung nähert und sich dabei die Lautstärke verändert, nämlich größer wird, ist es sehr einfach möglich, wenn mit entsprechendem Anstieg der Lautstärke sich auch die Flugbefeuerung dahingehend ändert, indem entweder der Blitz-/Aufleucht-/Ausschaltrhythmus ändert, z. B. mit ansteigender Lautstärke wird die Blitzfrequenz bzw. Aufleucht-/Ausschaltfrequenz erhöht und/oder dass sich mit ansteigender Lautstärke (die Lautstärke kann relativ einfach in der Signalverarbeitungseinrichtung festgestellt werden) die Helligkeit der Flugbefeuerung ändert, indem sich z. B. mit ansteigender Lautstärke des Flugobjekts die Leuchtintensität der Leuchtmittel entsprechend erhöht.

Eine weitere Maßnahme kann sein, dass unter Umständen sogar die verschiedenen Leuchtmittel, also rotes Licht und weißes Licht (roter Blitz/weißer Blitz) alternierend eingeschaltet werden, was insbesondere in der Nacht eine sehr große Aufmerksamkeit für den Flugzeugführer des Flugobjekts verursachen würde, denn das weiße Licht ist regelmäßig extrem hell und kann somit kaum übersehen werden.

Mithin kann beispielsweise durch ein Programm im PC die vorbeschriebene Steuerung der Leuchtmittel der Flugbefeuerung vorgenommen werden, indem bestimmten Lautstärkewerten, die mit der Mikrofonanordnung der akustischen Überwachungseinrichtung gemessen werden, bestimmte Leuchtereignisse zugeordnet werden, z. B. Blitz- bzw. Einschalt-/ Ausschaltfrequenz und/oder Leuchtstärke der Leuchtmittel.

## Patentansprüche

1. Windpark, bestehend aus einer oder mehreren Windenergie-anlagen,
wobei der Windpark eine akustische Überwachungseinrichtung mit einer Mikrofonanordnung aufweist,
wobei die Mikrofonanordnung Schallsignale oder Geräusche aus der Umgebung des Windparks aufnimmt und diese Schallsignale in einer mit der Mikrofonanordnung verbundenen Signalverarbeitungseinrichtung verarbeitet werden,
wobei eine Schalteinrichtung zum Einschalten einer Flugbefeuerungseinrichtung wenigstens einer Windenergieanlage des Windparks vorhanden ist und die Schalteinrichtung mit der Signalverarbeitungseinrichtung gekoppelt und von dieser gesteuert wird, so dass die Signalverarbeitungseinrichtung die Schalteinrichtung zur Einschaltung der Flugbefeuerung veranlasst, wenn mittels der akustischen Überwachungseinrichtung ein Schallsignal eines Flugobjekts, z. B. eines Flugzeug oder eines Helikopter, detektiert wird und/oder ein vorbestimmtes Tonsignal (z. B. Sinuston) durch die Geräusche des Flugobjekts überlagert und/oder verfälscht wird.

2. Windpark nach Anspruch 1,
**dadurch gekennzeichnet, dass** die Mikrofonanordnung auf der Gondel der Windenergieanlage angeordnet ist oder
das oder die Mikrofone der Mikrofonanordnung innerhalb der Gondel einer Windenergieanlage angeordnet sind.

3. Windpark nach einem der vorhergehenden Ansprüche,
**dadurch gekennzeichnet, dass** der akustischen Überwachungseinrichtung eine aktive oder passive Filtereinrichtung und/oder Signalverarbeitungseinrichtung zugeordnet ist, mittels der akustische Schallereignisse aus der Umgebung des Windparks bzw. einer Windenergieanlage aus dem vom Mikrofon aufgenommenen Signal herausgefiltert werden, zum Beispiel Schallereignisse wie Geräusche, die durch den Wind verursacht werden und/oder Geräusche, die durch die Windenergieanlage verursacht werden und/oder Geräusche, die durch Fahrzeuge am Boden des Windparks oder der Windenergieanlage verursacht werden.

4. Windpark nach einem der vorhergehenden Ansprüche,
**dadurch gekennzeichnet, dass** die Mikrofonanordnung aus wenigstens zwei Mikrofonen besteht,
wobei die Mikrofone in einem bestimmten Abstand zueinander angeordnet sind, vorzugsweise auf unterschiedlichen Seiten der Gondel einer Windenergieanlage.

5. Windpark nach einem der vorhergehenden Ansprüche,
**dadurch gekennzeichnet, dass** der Windpark N Windenergieanlagen aufweist, die am Rand des Windparks stehen und M Windenergieanlagen aufweist, die nicht am Rand des Windparks stehen,
wobei nur solche Windenergieanlagen mit einer akustischen Überwachungseinrichtung ausgestattet sind, die sich am Rand des Windparks befinden.

6. Windpark nach einem der vorhergehenden Ansprüche,
**dadurch gekennzeichnet, dass** wenigstens eine Windenergieanlage des Windparks mit einer Sekundär-Radar-Einrichtung ausgestattet ist, mittels der Transpondersignale empfangbar sind, die eine Höheninformation und/oder eine Ortsinformation, zum Beispiel "Nordpol" oder "Südpol", enthalten und dass dann, wenn das Transpondersignal eine bestimmte Inhaltsinformation aufweist, zum Beispiel eine Höheninformation, welche deutlich unterhalb von 9.144 m liegt, z. B. 152,40 m bis 609,60 m, die Flugbefeuerungseinrichtung der Windenergieanlage des Windparks eingeschaltet wird.

7. Windpark nach einem der vorhergehenden Ansprüche,
**dadurch gekennzeichnet, dass** dann, wenn die Sekundär-Radar-Einrichtung ein Transpondersignal empfängt, welches eine Höheninformation enthält, die eine Höhenangabe aufweist, die größer ist als ein vorbestimmter Wert, z. B. höher ist als 1.524 m, die Flugbefeuerungseinrichtung der Windenergieanlagen ausgeschaltet bleibt, wenn gleichzeitig kein entsprechendes Geräuschsignal über die akustische Überwachungseinrichtung erfasst wird und dass die Flugbefeuerungseinrichtung dennoch eingeschaltet wird, wenn über die Mikrofonanordnung ein Geräusch eines Flugobjekts detektiert wird und/oder
mittels der akustischen Überwachungseinrichtung auch in etwa die Ortung des Flugzeugs ermöglicht wird.

8. Windpark nach einem der vorhergehenden Ansprüche,
**dadurch gekennzeichnet, dass** dann, wenn mittels der akustischen Überwachungseinrichtung ein Geräusch eines Flugobjekts detektiert wird, gleichzeitig jedoch kein Transpondersignal empfangen wird, eine entsprechende Information, z. B. elektronische Warnmeldung, z. B. E-Mail, SMS oder dergl., an eine Luftraumüberwachungsstelle abgegeben wird.

9. Windpark nach einem der vorhergehenden Ansprüche,
**dadurch gekennzeichnet, dass** eine Windenergieanlage, vorzugsweise z. B. die Windenergieanlage, an der die Mikrofonanordnung bzw. Mikrofonanordnungen angebracht sind, mit einem Lautsprecher ausgestattet ist, mittels dem ein typisches Geräusch eines Flugobjekts erzeugbar ist, um von Zeit zu Zeit die Mikrofoneinrichtungen bzw. das akustische Erfassungssystem zu testen und dass dafür dem Lautsprecher eine entsprechende Signalquelle zugeordnet ist, in der ein typisches Geräusch eines Flugobjekts gespeichert ist.

10. Windpark nach einem der vorhergehenden Ansprüche,
**dadurch gekennzeichnet, dass** der Mikrofonanordnung eine akustische Datenbank zugeordnet ist, in welcher Geräusche, Tonsignale oder deren Frequenzspektrum verschiedener Flugobjekte gespeichert sind und dass bei Empfang eines akustischen Signals ein Vergleich des von der Mikrofonanordnung aufgenommenen akustischen Signals mit den im Speicher gespeicherten Datensätzen bzw. Signalen vorgenommen wird.

11. Windpark nach einem der vorhergehenden Ansprüche,
**dadurch gekennzeichnet, dass** alle Flugbefeuerungseinrichtungen der Windenergieanlagen eines Windparks über einen zentralen Rechner gesteuert werden,
wobei dieser Rechner bevorzugt an oder in einer Windenergieanlage des Windparks angeordnet ist und dass dieser zentrale Rechner mit der Mikrofonanordnung gekoppelt ist und im Falle einer Einschaltung der Flugbefeuerungseinrichtung des Windparks aufgrund der akustischen Erfassung eines Flugobjekts die Flugbefeuerungseinrichtung einschaltet und/oder
der zentrale Rechner des Windparks auch mit der Radareinrichtung gekoppelt ist und im Falle des Empfangs eines Transpondersignals, welches die Einschaltung der Flugbefeuerungseinrichtung auslösen soll, die Flugbefeuerungseinrichtung einschaltet.

12. Windpark nach einem der vorhergehenden Ansprüche,
**dadurch gekennzeichnet, dass** eine Windenergieanlage des Windparks mit einem Lautsprecher ausgestattet ist, mittels dem typische Fluggeräusche eines Flugobjekts oder einer Windenergieanlage erzeugbar sind,
wobei der Lautsprecher bevorzugt auf der Windenergieanlage angeordnet ist, auf der auch die Mikrofonanordnung angeordnet ist und/oder
das Mikrofon oder die Mikrofone der Mikrofonanordnung mit einer Körperschallisolierung versehen sind, um Schallsignale der Windenergieanlage selbst weitestgehend zu unterdrücken.

13. Windpark nach einem der vorhergehenden Ansprüche,
**dadurch gekennzeichnet, dass** eine Windenergieanlage des Windparks mit einer Tonsignalquelle ausgestattet ist, mittels der ein vorbestimmtes Tonsignal, z. B. ein Sinuston, generiert wird und dass die Flugbefeuerungseinrichtung nicht eingeschaltet wird bzw. ausgeschaltet bleibt, solange die Mikrofonanordnung das vorbestimmte Tonsignal des Lautsprechers in hinreichender Qualität aufnimmt und dass eine Einschaltung der Flugbefeuerungseinrichtung der Windenergieanlage bzw. der Windenergieanlagen des Windparks stattfindet, wenn das Tonsignal von einem anderen Geräusch, z. B. eines herannahenden Flugobjekts, übertönt oder so weit verfälscht wird, dass keine sichere Erkennung und/oder kein Empfang des Tonsignals durch die Überwachungseinrichtung mehr feststellbar ist.

14. Verfahren zur Steuerung der Flugbefeuerung eines Windparks, insbesondere nach einem der Ansprüche 1 bis 13, mittels einer akustischen Überwachung,
wobei der Windpark aus einer oder mehreren Windenergieanlagen besteht und
wobei der Windpark eine akustische Überwachungseinrichtung mit einer Mikrofonanordnung aufweist,
wobei die Mikrofonanordnung Schallsignale oder Geräusche aus der Umgebung des Windparks aufnimmt und diese Schallsignale in einer mit der Mikrofonanordnung verbundenen Signalverarbeitungseinrichtung verarbeitet werden,
wobei eine Schalteinrichtung zum Einschalten einer Flugbefeuerungseinrichtung wenigstens einer Windenergieanlage des Windparks vorhanden ist und die Schalteinrichtung mit der Signalverarbeitungseinrichtung gekoppelt und von dieser gesteuert wird, so dass die Signalverarbeitungseinrichtung die Schalteinrichtung zur Einschaltung der Flugbefeuerung veranlasst, wenn mittels der akustischen Überwachungseinrichtung ein Schallsignal eines Flugobjekts, z. B. eines Flugzeug oder eines Helikopter, detektiert wird und/oder ein vorbestimmtes Tonsignal (z. B. Sinuston) durch die Geräusche des Flugobjekts überlagert und/oder verfälscht wird.

15. Verwendung einer akustischen Überwachungseinrichtung einer Windenergieanlage zur Steuerung bzw. Einschaltung oder Ausschaltung einer Flugbefeuerung einer Windenergieanlage oder eines Windrads bei Annäherung eines Flugobjekts, wenn mittels der akustischen Überwachungseinrichtung ein Schallsignal des Flugobjekts detektiert wird und/oder ein vorbestimmtes Tonsignal (z.B. Sinuston) durch die Geräusche des Flugobjekts überlagert und/oder verfälscht wird.

## Claims

1. Wind park comprising one or more wind power installations,
wherein the wind park has an acoustic monitoring device having a microphone arrangement,
wherein the microphone arrangement records sound signals or noises from the environment of the wind park and said sound signals are processed in a signal processing device connected to the microphone arrangement,
wherein there is provided a switching device for switching on a flight lighting arrangement of at least one wind power installation of the wind park and the switching device is coupled to and controlled by the signal processing device so that the signal processing device causes the switching device to switch on the flight lighting arrangement if a sound signal of a flying object, for example an aircraft or a helicopter, is detected by means of the acoustic monitoring device, and/or a predetermined sound signal (for example sine sound) is superposed and/or falsified by the noises of the flying object.

2. Wind park according to claim 1,
**characterised in that** the microphone arrangement is arranged on the pod of the wind power installation or
the microphone or the microphones of the microphone arrangement are arranged inside of the pod.

3. Wind park according to one of the preceding claims **characterised in that** associated with the acoustic monitoring device is an active or passive filter device and/or signal processing device, by means of which the acoustic sound events from the environment of the wind park or a wind power installation are filtered out of the signal recorded by the microphone, for example sound events like noises which are caused by the wind and/or noises which are caused by the wind power installation and/or noises which are caused by vehicles on the ground at the wind park or the wind power installation.

4. Wind park according to one of the preceding claims **characterised in that** the microphone arrangement comprises at least two microphones,
wherein the microphones are arranged at a given spacing relative to each other, preferably on different sides of the pod of a wind power installation.

5. Wind park according to one of the preceding claims **characterised in that** the wind park has N wind power installations which are at the edge of the wind park and M wind power installations which are not at the edge of the wind park,
wherein only those wind power installations which are at the edge of the wind park are equipped with an acoustic monitoring device.

6. Wind park according to one of the preceding claims **characterised in that** at least one wind power installation of the wind park is equipped with a secondary radar device, by means of which transponder signals can be received, which include height information and/or location information, for example "North Pole" or "South Pole" or the like, and when the transponder signal has a given information content, for example height information which is markedly below 9.144 m, for example 152,40 m to 609,60 m, the flight lighting arrangement of the wind power installation of the wind park is switched on.

7. Wind park according to one of the preceding claims **characterised in that** when the secondary radar device receives a transponder signal which includes height information which has a height detail which is greater than a predetermined value, for example higher than 1.524 m, the flight lighting arrangement of the wind power installations remains switched off if at the same time no corresponding noise signal is detected by way of the acoustic monitoring device and the flight lighting arrangement nonetheless is switched on if a noise of a flying object is detected by way of the microphone arrangement and/or
approximately locating the position of the aircraft is also made possible by means of the acoustic monitoring device.

8. Wind park according to one of the preceding claims **characterised in that** when a noise of a flying object is detected by means of the acoustic monitoring device but no transponder signal is received at the same time a corresponding item of information, for example an electronic warning message, for example e-mail, SMS or the like, is delivered to an airspace monitoring station.

9. Wind park according to one of the preceding claims **characterised in that** a wind power installation, preferably for example the wind power installation to which the microphone arrangement or arrangements are mounted, is equipped with a loudspeaker, by means of which a typical noise of a flying object can be produced in order from time to time to test the microphone devices or the acoustic detection system, and that for that purpose associated with the loudspeaker is a corresponding signal source in which a typical noise of a flying object is stored.

10. Wind park according to one of the preceding claims **characterised in that** associated with the microphone arrangement is an acoustic data bank in which noises, sound signals or their frequency spectrum of various flying objects are stored and upon reception of an acoustic signal a comparison is made between the acoustic signal recorded by the microphone arrangement and the signals or data sets stored in the memory.

11. Wind park according to one of the preceding claims **characterised in that** all flight lighting arrangements of the wind power installations of a wind park are controlled by way of a central computer,
wherein said computer is preferably at or in a wind power installation of the wind park and said central computer is coupled to the microphone arrangement and in the event of the flight lighting arrangement of the wind park being switched on, by virtue of acoustic detection of a flying object, it switches on the flight lighting arrangement and/or
the central computer of the wind park is also coupled to the radar device and in the event of the reception of a transponder signal which is intended to trigger switching the flight lighting arrangement on, it switches on the flight lighting arrangement.

12. A method or wind park according to one of the preceding claims **characterised in that** a wind power installation of the wind park is equipped with a loudspeaker, by means of which typical flight noises of a flying object or of a wind power installation can be produced,
wherein the loudspeaker is preferably arranged on the wind power installation on which the microphone arrangement is also arranged and/or
the microphone or microphones of the microphone arrangement are provided with a solid-borne sound insulation to very substantially suppress sound signals from the wind power installation itself.

13. Wind park according to one of the preceding claims **characterised in that** a wind power installation of the wind park is equipped with a sound signal source, by means of which a predetermined sound signal, for example a sine sound, is generated and the flight lighting arrangement is not switched on or remains switched off as long as the microphone arrangement records the predetermined sound signal of the loudspeaker with adequate quality and the flight lighting arrangement of the wind power installation or installations of the wind park is switched on when the sound signal is drowned out by another noise, for example an approaching flying object, or is falsified to such an extent that it is no longer possible to establish reliable detection and/or reception of the sound signal by the monitoring device.

14. A method of controlling the flight lighting arrangement of a wind park, preferably according to one of the claims 1 to 13, by means of acoustic monitoring
wherein the wind park comprising one or more wind power installations,
wherein the wind park has an acoustic monitoring device having a microphone arrangement,
wherein the microphone arrangement records sound signals or noises from the environment of the wind park and said sound signals are processed in a signal processing device connected to the microphone arrangement,
wherein there is provided a switching device for switching on a flight lighting arrangement of at least one wind power installation of the wind park and the switching device is coupled to and controlled by the signal processing device so that the signal processing device causes the switching device to switch on the flight lighting arrangement if a sound signal of a flying object, for example an aircraft or a helicopter, is detected by means of the acoustic monitoring device, and/or a predetermined sound signal (for example sine sound) is superposed and/or falsified by the noises of the flying object.

15. Use of an acoustic monitoring device of a wind power installation for controlling or switching on or off a flight lighting arrangement of a wind power installation or a wind turbine when a flying object approaches, if a sound signal of the flying object is detected by means of the acoustic monitoring device and/or a predetermined sound signal (for example sine sound) is superposed and/or falsified by the noise of the flying object.

## Revendications

1. Parc éolien, constitué d'une ou de plusieurs éoliennes,
dans lequel le parc éolien présente un dispositif de surveillance acoustique avec un ensemble de microphones,
dans lequel l'ensemble de microphones reçoit des signaux acoustiques ou des bruits provenant de l'environnement du parc éolien et lesdits signaux acoustiques sont traités dans un dispositif de traitement de signaux relié à l'ensemble de microphones,
dans lequel un dispositif de commutation est présent pour activer un dispositif de feu de balisage d'au moins une éolienne du parc éolien et le dispositif de commutation est couplé au dispositif de traitement de signaux et est commandé par celui-ci de sorte que le dispositif de traitement de signaux amène le dispositif de commutation à activer le feu de balisage quand un signal acoustique d'un objet volant, par exemple d'un avion ou d'un hélicoptère, est détecté au moyen du dispositif de surveillance acoustique et/ou qu'un signal sonore prédéfini (par exemple un son sinusoïdal) est couvert et/ou faussé par les bruits de l'objet volant.

2. Parc éolien selon la revendication 1,
**caractérisé en ce que** l'ensemble de microphones est disposé sur la nacelle de l'éolienne ou
le ou les microphones de l'ensemble de microphones sont disposés à l'intérieur de la nacelle d'une éolienne.

3. Parc éolien selon l'une quelconque des revendications précédentes,
**caractérisé en ce qu'**un dispositif filtrant actif ou passif et/ou un dispositif de traitement de signaux sont associés au dispositif de surveillance acoustique, sont filtrés au moyen des événements sonores acoustiques provenant de l'environnement du parc éolien ou d'une éolienne, à partir du signal enregistré par le microphone, par exemple des événements sonores, tels que des bruits qui sont provoqués par le vent et/ou des bruits qui sont provoqués par l'éolienne et/ou des bruits, qui sont provoqués par des avions au niveau du sol du parc éolien ou de l'éolienne.

4. Parc éolien selon l'une quelconque des revendications précédentes,
**caractérisé en ce que** l'ensemble de microphones est constitué d'au moins deux microphones,
dans lequel les microphones sont disposés à une distance définie les uns par rapport aux autres, de préférence sur des côtés différents de la nacelle d'une éolienne.

5. Parc éolien selon l'une quelconque des revendications précédentes,
**caractérisé en ce que** le parc éolien présente N éoliennes, qui se situent sur le bord du parc éolien, et présente M éoliennes, qui ne se situent pas sur le bord du parc éolien,
dans lequel seules des éoliennes, qui se trouvent sur le bord du parc éolien, sont équipées d'un dispositif de surveillance acoustique.

6. Parc éolien selon l'une quelconque des revendications précédentes,
**caractérisé en ce qu'**au moins une éolienne du parc éolien est équipée d'un dispositif radar secondaire, au moyen duquel des signaux de transpondeur peuvent être reçus, qui contiennent une information de hauteur et/ou une information de localisation, par exemple « le pôle Nord » ou le « pôle Sud », et que quand le signal de transpondeur présente une information de contenu définie, par exemple une information de hauteur, laquelle est nettement inférieure à 9144 m, par exemple va de 152,40 m à 609,60 m, le dispositif de feu de balisage de l'éolienne du parc éolien est activé.

7. Parc éolien selon l'une quelconque des revendications précédentes,
**caractérisé en ce que** quand le dispositif radar secondaire reçoit un signal de transpondeur, lequel contient une information de hauteur, qui présente une indication de hauteur, qui est supérieure à une valeur prédéfinie, par exemple supérieure à 1524 m, le dispositif de feu de balisage des éoliennes reste désactivé quand dans le même temps aucun signal de bruit correspondant n'est détecté par l'intermédiaire du dispositif de surveillance acoustique, et que le dispositif de feu de balisage est néanmoins activé quand un bruit d'un objet volant est détecté par l'intermédiaire de l'ensemble de microphones, et/ou
par exemple la localisation de l'avion est permise au moyen du dispositif de surveillance acoustique.

8. Parc éolien selon l'une quelconque des revendications précédentes,
**caractérisé en ce que** quand un bruit d'un objet volant est détecté au moyen du dispositif de surveillance acoustique, toutefois aucun signal de transpondeur n'est dans le même temps reçu, une information correspondante, par exemple un message d'alerte, par exemple un e-mail, un SMS ou similaire, est envoyé à un centre de surveillance de l'espace aérien.

9. Parc éolien selon l'une quelconque des revendications précédentes,
**caractérisé en ce qu'**une éolienne, de préférence par exemple l'éolienne, au niveau de laquelle l'ensemble de microphones ou les ensembles de microphones sont installés, est équipée d'un haut-parleur, au moyen duquel un bruit typique d'un objet volant peut être généré pour tester de temps à autre les dispositifs de microphone ou le système de détection acoustique, et que pour cela une source de signaux est associée au haut-parleur, dans laquelle un bruit typique d'un objet volant est mémorisé.

10. Parc éolien selon l'une quelconque des revendications précédentes,
**caractérisé en ce qu'**une base de données acoustique est associée à l'ensemble de microphones, dans laquelle des bruits, des signaux sonores ou leur spectre de fréquence de différents objets volants sont mémorisés, et qu'à réception d'un signal acoustique, une comparaison du signal acoustique enregistré par l'ensemble de microphones aux jeux de données ou signaux mémorisés dans la mémoire est mise en œuvre.

11. Parc éolien selon l'une quelconque des revendications précédentes
**caractérisé en ce que** tous les dispositifs de feu de balisage des éoliennes d'un parc éolien sont commandés par l'intermédiaire d'un calculateur central,
dans lequel ledit calculateur est disposé de manière préférée au niveau de ou dans une éolienne du parc éolien, et que ledit calculateur central est couplé à l'ensemble de microphones et active, dans le cas d'une activation du dispositif de feu de balisage du parc éolien du fait de la détection acoustique d'un objet volant, le dispositif de feu de balisage, et/ou
le calculateur central du parc éolien est également couplé au dispositif radar et active, dans le cas de la réception d'un signal de transpondeur, lequel doit déclencher l'activation du dispositif de feu de balisage, le dispositif de feu de balisage.

12. Parc éolien selon l'une quelconque des revendications précédentes,
**caractérisé en ce qu'**une éolienne du parc éolien est équipée d'un haut-parleur, au moyen duquel des bruits d'aéronef typiques d'un objet volant ou d'une éolienne peuvent être générés,
dans lequel le haut-parleur est disposé de manière préférée sur l'éolienne, sur laquelle l'ensemble de microphones est également disposé, et/ou
le microphone ou les microphones de l'ensemble de microphones sont pourvus d'une isolation contre les bruits de structure pour supprimer autant que possible des signaux acoustiques de l'éolienne proprement dite.

13. Parc éolien selon l'une quelconque des revendications précédentes,
**caractérisé en ce qu'**une éolienne du parc éolien est équipée d'une source de signaux sonores, au moyen de laquelle un signal sonore prédéfini, par exemple un son sinusoïdal, est généré, et que le dispositif de feu de balisage n'est pas activé ou reste désactivé tant que l'ensemble de microphones enregistre le signal sonore prédéfini du haut-parleur dans une qualité suffisante, et qu'une activation du dispositif de feu de balisage de l'éolienne ou des éoliennes du parc éolien a lieu quand le signal sonore est recouvert par un autre bruit, par exemple un objet volant à l'approche ou est si faussé qu'aucune identification fiable et/ou aucune réception du signal sonore ne peut plus être relevée par le dispositif de surveillance.

14. Procédé servant à commander le feu de balisage d'un parc éolien, en particulier selon l'une quelconque des revendications 1 à 13, au moyen d'une surveillance acoustique,
dans lequel le parc éolien est constitué d'une ou de plusieurs éoliennes, et
dans lequel le parc éolien présente un dispositif de surveillance acoustique avec un ensemble de microphones,
dans lequel l'ensemble de microphones enregistre des signaux acoustiques ou des bruits provenant de l'environnement du parc éolien et lesdits signaux acoustiques sont traités dans un dispositif de traitement de signaux relié à l'ensemble de microphones,
dans lequel un dispositif de commutation est présent pour activer un dispositif de feu de balisage d'au moins une éolienne du parc éolien et le dispositif de commutation est couplé au dispositif de traitement de signaux ou est commandé par celui-ci de sorte que le dispositif de traitement de signaux amène le dispositif de commutation à activer le feu de balisage quand un signal acoustique d'un objet volant, par exemple d'un avion ou d'un hélicoptère, est détecté au moyen du dispositif de surveillance acoustique et/ou un signal sonore prédéfini (par exemple un son sinusoïdal) est couvert et/ou faussé par les bruits de l'objet volant.

15. Utilisation d'un dispositif de surveillance acoustique d'une éolienne servant à commander ou à activer ou désactiver un feu de balisage d'une éolienne ou d'une roue éolienne à l'approche d'un objet volant quand un signal acoustique de l'objet volant est détecté au moyen du dispositif de surveillance acoustique et/ou qu'un signal sonore prédéfini (par exemple un son sinusoïdal) est couvert et/ou faussé par les bruits de l'objet volant.
